# FASCICULE DE BREVET EUROPEEN

(11) **EP 2 692 024 B1**
(45) Date de publication et mention de la délivrance du brevet: **06.05.2015**
(21) Numéro de dépôt: 12712318.0
(22) Date de dépôt: 02.03.2012
(51) Int. Cl.: H01R 13/447, H01R 13/52, B60K 15/05, B60L 11/18

(54) **DISPOSITIF DE TRAPPE DE PRISE DE CHARGE ELECTRIQUE POUR VEHICULE ELECTRIQUE COMPATIBLE AVEC LE CHOC PIETON**
GEGEN FUSSGÄNGEREINWIRKUNGEN BESTÄNDIGE KLAPPENVORRICHTUNG FÜR EINE ELEKTROFAHRZEUG-LADEBUCHSE
ELECTRIC VEHICLE CHARGING-SOCKET FLAP DEVICE COMPATIBLE WITH PEDESTRIAN IMPACTS

(30) Priorité: 31.03.2011 FR 1152696
(43) Date de publication de la demande: 05.02.2014
(73) Titulaire: Renault S.A.S., 92100 Boulogne-Billancourt (FR)
(72) Inventeur: HUDRY, Efflam, F-92140 Clamart (FR); BOUAS, Patrick, F-91210 Draveil (FR); METAIS, Florent, F-78180 Montigny Le Bretonneux (FR)
(86) Numéro de dépôt international: PCT/FR2012/050446
(87) Numéro de publication internationale: WO 2012/131204

(56) Documents cités:
- FR-A1- 2 931 400

## Description

L'invention concerne un dispositif de trappe de prise de charge électrique pour véhicule électrique, en particulier à boîtier de col de cygne, compatible avec le choc piéton.

On sait que les trappes de prise de charge électrique sur les véhicules électriques sont implantées sensiblement en partie médiane de la façade avant de ces véhicules. L'ouverture de la trappe est formée dans un boîtier logeant un élément d'articulation d'un portillon de fermeture de l'ouverture de la trappe, laquelle reçoit en service une fiche électrique de charge de la batterie du véhicule électrique. L'élément d'articulation est généralement du type à col de cygne faisant saillie dans le boîtier. Le boîtier est fermé par un couvercle l'isolant des poussières et de l'eau. Le couvercle possède une forme externe concave permettant le débattement de l'élément d'articulation. Le couvercle est plus particulièrement exposé au choc, constituant un point dur sous le capot avant, qui peut être dangereux pour les piétons en cas de choc sur la façade avant de carrosserie du véhicule. Un tel dispositif de trappe est décrit dans la demande de brevet FR 2 931 400 A1.

Il existe donc un besoin pour parer au caractère dangereux de ces trappes de prise de charge électrique sur les véhicules électriques, et plus précisément du couvercle du boîtier logeant l'élément d'articulation.

Il est proposé un dispositif de trappe de prise de charge électrique pour véhicule électrique, comportant :
- un châssis comprenant une ouverture et un boîtier adjacent à l'ouverture, le boîtier présentant un orifice,
- un portillon mobile formant trappe apte à fermer l'ouverture du châssis,
- un élément d'articulation du portillon logé dans le boîtier,
- un couvercle apte à fermer l'orifice du boîtier,
caractérisé en ce que le couvercle est monté sur l'orifice du boîtier de manière à être écarté de cet orifice à au moins un bord de l'orifice en position fermée sur le boîtier, le couvercle étant maintenu écarté du bord par un moyen de maintien apte à permettre au couvercle d'être déplacé de façon amortie vers le bord sous un choc, notamment le choc d'un piéton sur une zone de la paroi de carrosserie du véhicule couvrant le dispositif de trappe.

Un tel moyen de maintien permet de maintenir le couvercle à une distance prédéterminée d'un ou plusieurs bords de l'orifice du boîtier en position fermée du couvercle.

Lorsque le dispositif de trappe selon l'invention est monté dans un véhicule, généralement sous une paroi de carrosserie, il est orienté de sorte que l'orifice du boîtier soit tourné vers cette paroi de carrosserie du véhicule, par exemple le capot avant du véhicule.

Il résulte de la disposition du dispositif de trappe selon l'invention que le couvercle est apte à absorber au moins une partie d'un choc à son endroit sur le véhicule en étant amené de façon amortie vers le bord de l'orifice équipé du moyen de maintien, ce qui permet de limiter à la fois le choc d'impact sur le point dur que constitue le dispositif de trappe de prise de charge électrique, notamment pour un piéton sujet à un choc à cet endroit de la carrosserie du véhicule, et également de limiter les risques de casse du couvercle.

Cela est d'autant plus important lorsque le dispositif de trappe est implanté sensiblement en partie médiane de la façade avant de carrosserie du véhicule sous le capot avant du véhicule, zone la plus sujette à un choc de piéton.

Selon son mode de fixation au boîtier, le couvercle pourra être amovible, permettant de libérer entièrement l'orifice du boîtier pour accéder à l'élément d'articulation, ou mobile entre la position fermée et une position ouverte permettant l'accès à l'élément d'articulation.

Avantageusement, l'élément d'articulation est du type à col de cygne, par exemple formé d'une pièce avec le portillon. Un tel élément présente la forme d'un col de cygne dont une extrémité est solidaire du portillon, et son articulation au boîtier est déportée par rapport à son extrémité solidaire du portillon, permettant ainsi de dégager largement l'ouverture du châssis lors de l'ouverture du portillon.

De façon avantageuse, le moyen de maintien est conçu de manière à exercer un rappel du couvercle depuis une position en butée sur l'orifice jusqu'à une position écartée de l'orifice où le libre débattement de l'élément d'articulation peut s'exercer.

L'effort de maintien ou rappel du couvercle en écartement de l'orifice du boîtier exercé par le moyen de maintien pourra être réglé à une valeur suffisante pour amortir l'impact de choc d'un piéton, notamment de taille moyenne sur le dispositif de trappe, par exemple comprise entre 100 et 200 newtons (bornes comprises).

La distance d'écartement du couvercle au bord correspondant de l'orifice du boîtier sera déterminée de manière à être suffisante pour absorber le jeu de débattement dans le boîtier de l'élément d'articulation du portillon de trappe, en particulier d'un élément d'articulation de col de cygne dans le boîtier, afin d'éviter le frottement de l'élément d'articulation sur le couvercle en position fermée du couvercle. Cette distance peut par exemple être comprise entre 5 et 15 mm.

Selon un mode de réalisation, le moyen de maintien comprend au moins un ressort à lame solidarisé au couvercle ou à un bord de l'orifice du boîtier, et en prise avec le bord correspondant de l'orifice du boîtier ou la partie de couvercle correspondante, respectivement.

Un tel ressort constitue un moyen simple et facile de mise en oeuvre du moyen de maintien.

Naturellement, selon un autre mode de réalisation, le moyen de maintien peut encore comporter un agencement à vérin amortisseur ou frein relié au couvercle et à l'orifice du boîtier, ou à joint mousse ou en matière élastomère interposé entre le couvercle et l'orifice du boîtier, apte à amortir au choc le mouvement du couvercle vers l'orifice du boîtier.

Différents modes de réalisation du moyen de maintien peuvent être utilisés seuls ou en combinaison pour maintenir le couvercle à l'écart du bord de l'orifice du boîtier.

Avantageusement, le couvercle peut présenter au moins une saillie en regard d'un bord de l'orifice du boîtier, lorsque le boîtier est en position fermée, le moyen de maintien étant disposé entre ladite saillie et ledit bord afin de les maintenir écartés l'un de l'autre en position fermée du couvercle.

L'orifice du boîtier présente avantageusement une forme polygonale, par exemple en rectangle, bien que d'autres formes soient envisageables.

Avantageusement, le couvercle comporte sur au moins une partie de sa périphérie une jupe entourant le bord de l'orifice du boîtier lorsque le couvercle est en position fermée, empêchant ainsi l'intrusion de poussières et d'eau dans le boîtier.

Le couvercle peut être guidé dans son déplacement de façon amortie vers le bord de l'orifice du boîtier, en cas de choc, par au moins une lumière, de préférence deux lumières latérales opposées de la jupe du couvercle coopérant chacune avec un élément guide correspondant du boîtier monté coulissant dans la lumière.

Cet élément guide peut être un ergot ou un clip.

Avantageusement, l'élément guide est un clip permettant le montage rapide du couvercle en position fermée sur le boîtier par une simple poussée manuelle sur le couvercle en position sur l'orifice du boîtier. On peut notamment envisager que le couvercle soit monté sur le boîtier uniquement par des clips.

L'élément guide peut constituer un élément de fin de course du couvercle à une extrémité de la lumière en position écartée du couvercle sur l'orifice du boîtier, mais également il peut constituer un élément de butée de fin de course du couvercle, à l'autre extrémité de la lumière, du mouvement du couvercle vers le boîtier en cas de choc.

Le couvercle peut être posé ou articulé sur un premier bord ou côté de l'orifice du boîtier et maintenu écarté de l'orifice à un deuxième bord ou côté, de préférence éloigné du premier bord ou côté. Ainsi, le couvercle se comporte au choc à son endroit de façon analogue à celle d'un soufflet.

Le côté où le couvercle est écarté du bord de l'orifice du boîtier est de préférence celui le plus proche de la paroi du véhicule susceptible de recevoir un choc, en particulier le capot avant du véhicule. Ce côté où le couvercle est écarté du bord de l'orifice du boîtier peut être celui qui est le plus éloigné du portillon formant trappe.

Toutefois, le couvercle peut également être maintenu écarté de l'orifice du boîtier sur un ou plusieurs côtés du couvercle, de préférence proche(s) de la paroi du véhicule, voire sur tous ses côtés.

Le couvercle du boîtier présente avantageusement une forme bombée adaptée au débattement de l'élément d'articulation, en particulier d'un élément d'articulation de col de cygne.

Il est également proposé un véhicule comportant un dispositif de trappe de prise de charge électrique tel que décrit ci-dessus.

L'invention est décrite ci-après à l'aide d'un exemple de réalisation non limitatif et en référence aux dessins annexés sur lesquels :
- la fig. 1 est une vue en coupe schématique d'un dispositif de trappe de prise de charge électrique pour véhicule électrique selon un mode de réalisation de l'invention,
- la fig. 2 est une vue analogue à la fig. 1 montrant le débattement du portillon formant trappe,
- les fig. 3 et 4 sont des vues en perspective du couvercle du boîtier du dispositif de la fig. 1, respectivement, avant un choc et après un choc, et
- La figure 5 est une vue agrandie du côté de couvercle de boîtier écarté de l'orifice du boîtier.

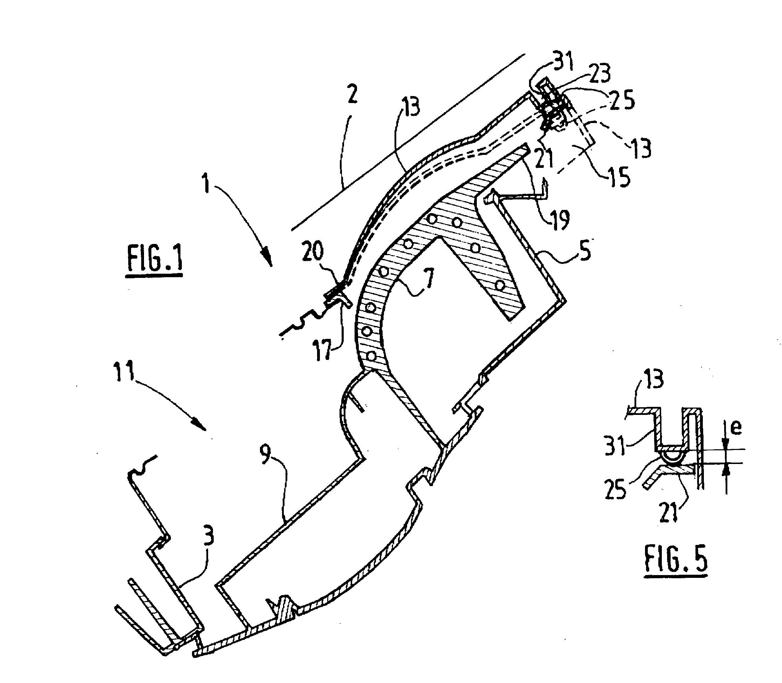

Le dispositif de trappe 1 de prise de charge électrique, tel que représenté à la fig. 1, est destiné être implanté en partie médiane de la façade avant de carrosserie d'un véhicule automobile électrique (non représenté), en particulier sous le capot avant 2 de ce véhicule, à faible distance de ce dernier (de 5 à 50 mm).

Ce dispositif de trappe 1 comprend un châssis 3 comprenant une ouverture 11 et un boîtier 5 adjacent à l'ouverture 11.

Le dispositif comprend également un portillon mobile 9 formant trappe apte à fermer l'ouverture 11.

Cette ouverture 11 forme avantageusement une ouverture de prise de charge électrique, fermée par le portillon 9, par laquelle on peut accéder à un connecteur par une fiche électrique (non représenté). Le portillon 9 étant ouvert, il est ainsi possible de raccorder la fiche électrique (non représentée) au connecteur via l'ouverture 11.

Le boîtier 5 loge un élément d'articulation à col de cygne 7 du portillon 9 de fermeture de l'ouverture 11.

Dans l'exemple, cet élément d'articulation à col de cygne 7 est réalisé d'une pièce avec le portillon 9.

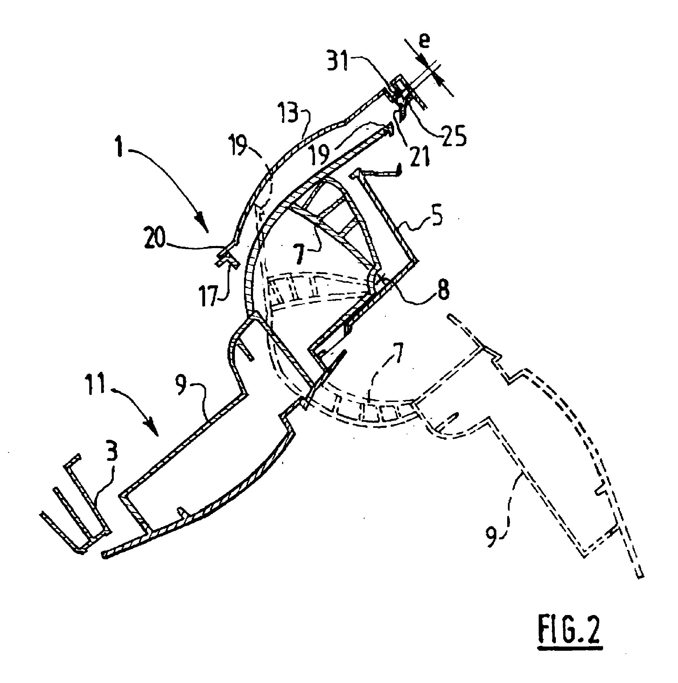

Cet élément d'articulation du type à col de cygne 7 comporte un axe d'articulation 8 (figure 2) déporté dans le boîtier 5 à l'extérieur de l'ouverture 11, ce qui assure un large dégagement du portillon 9 de l'ouverture 11. Ce faisant, il permet une introduction aisée de la fiche dans l'ouverture 11.

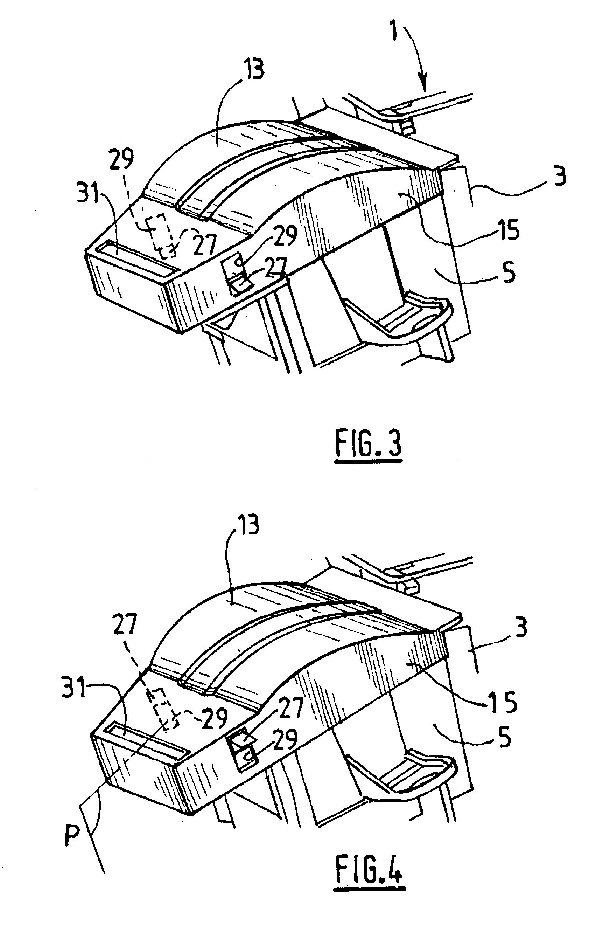

Le boîtier 5 est surmonté d'un couvercle 13 de base sensiblement rectangle (voir aussi les figures 3 et 4), pourvu d'une jupe périphérique 15, laquelle entoure un orifice supérieur 17 du boîtier et ferme cet orifice, empêchant ainsi toute intrusion de poussière ou d'eau susceptible d'affecter l'élément d'articulation 7. Cet orifice est tourné vers la paroi de carrosserie du véhicule sous laquelle est monté le dispositif de trappe selon l'invention, par exemple le capot avant du véhicule, pour permettre l'accès à l'élément d'articulation.

Le boîtier 5 constitue une partie en saillie rigide du dispositif de trappe 1, proche du capot avant 2 du véhicule et représente un point dur en cas de choc, notamment au niveau de son couvercle, en particulier choc d'un piéton renversé sur le capot avant du véhicule. De fait, le couvercle subit également souvent des dommages lors d'un tel choc.

Le couvercle 13 est conformé bombé en surface avec un espace de jeu sous sa face tournée vers l'élément d'articulation 7 permettant le débattement de cet élément d'articulation (fig. 2), notamment de sa partie d'extrémité 19 opposée au portillon, laquelle est représentée en trait interrompu en position de portillon ouvert.

Le couvercle 13 est monté sur l'orifice supérieur 17 du boîtier et obture l'orifice 17 en position fermée.

Ce couvercle peut être mobile ou amovible. Dans l'exemple, il est articulé ou simplement posé à son côté d'extrémité 20 le plus proche du portillon 9. Le côté d'extrémité opposé au précédent est pourvu d'une saillie 31 en regard du bord de l'orifice 17 du boîtier, s'étendant avantageusement parallèlement à la jupe. Dans l'exemple représenté, cette saillie 31 est formée par une cavité 31 de section en U et sa branche médiane est formée en regard du bord 21 de l'orifice du boîtier. La saillie 31 pourrait toutefois être réalisée de toute autre manière adaptée. Il pourrait s'agir par exemple d'une paroi s'étendant perpendiculairement au couvercle et présentant une épaisseur suffisante pour supporter ou recevoir un moyen de maintien.

Cette saillie 31 est maintenue relevée ou écartée du bord correspondant 21 de l'ouverture du boîtier (vers le haut comme on le voit sur le dessin à la figure 5).

L'espace de jeu e entre la saillie d'extrémité 31 du couvercle et le bord correspondant 21 du boîtier, s'élève à quelques millimètres, par exemple de 5 à 15 mm.

Cet espace de jeu e est maintenu grâce à un moyen de maintien 23 comportant un ressort 25 dans l'exemple représenté.

Le ressort 25 est un ressort à lame fixé à la saillie d'extrémité 31, sous cette dernière.

Le ressort 25 est interposé entre la saillie 31 et le bord 21, étant apte à s'appuyer en position fermée du couvercle sur le bord 21 du boîtier pour maintenir l'espace de jeu e. L'effort de rappel de maintien du couvercle écarté de l'orifice de boîtier (vers le haut comme on le voit sur la figure 2) peut être d'environ 150 newtons.

Deux lumières latérales 29 (figures 3 et 4) sont découpées dans la jupe 15 du couvercle. Ces lumières opposées l'une à l'autre par rapport à un plan de symétrie longitudinal médian P du couvercle reçoivent des clips 27 de guidage du mouvement du couvercle vers l'orifice du boîtier, à un choc éventuel sur le couvercle. Le mouvement du couvercle vers le bas, au choc, est effectué de façon amortie, grâce à l'action de rappel du ressort.

Les clips 27 sont montés coulissant en symétrie l'un de l'autre par rapport au plan P, chacun dans chacune des lumières 29 respectivement, sur une longueur e, égale au jeu e.

Ces clips 27 sont destinés à venir en butée à l'extrémité basse des lumières 29 (fig. 3) en position de fermeture du couvercle sur l'orifice du boîtier pour maintenir l'espace de jeu e sous le rappel du ressort 25.

Le fonctionnement du dispositif est à présent décrit.

En position de roulement du véhicule, le couvercle du boîtier est en position fermée, étant maintenu à l'espace de jeu e, comme représenté à la figure 3.

Supposons un choc sur le capot 2 dans une zone couvrant le dispositif 1. Ce choc est d'abord absorbé par le capot 2 qui se déforme, puis par le couvercle 13 et éventuellement la partie restante du dispositif, qui est moins rigide que le boîtier.

Le côté du couvercle écarté de l'orifice du boîtier s'efface alors au choc (fig. 4) selon un mouvement vers le bas d'amplitude égale à la course admissible e des clips 27 dans les lumières 29, par exemple d'environ 12 mm, le couvercle venant alors en fin de course en butée sur l'orifice 17 de boîtier et les clips 27 se trouvant alors chacun à l'extrémité haute des lumières 29 (figure 4). L'effacement au choc du couvercle, outre qu'il absorbe au moins une partie du choc concourt à un risque moindre de casse du couvercle qui, s'il demeure intact au choc, peut alors être remis à sa position d'origine après redressement du capot. Naturellement, si le choc est violent, le couvercle peut s'affaisser, casser et les clips sortir des lumières.

On peut prévoir en outre en tant que moyen de maintien un élément de joint et/ou de frottement ou frein (non représenté) solidaire du couvercle et/ou du bord du boîtier, décélérant le mouvement vers le bas du couvercle à l'approche du bord de l'orifice 21 en cas de choc et augmentant l'effort vers le bas du couvercle contre le bord de l'orifice et donc amortissant d'autant le choc.

Naturellement, le positionnement relevé du couvercle pourrait être assuré par un autre moyen de maintien que celui décrit, tel, comme précité, un agencement de vérin, en particulier un agencement de vérin pneumatique, ou un joint mousse ou élastomère en place du ressort à lame ou tout autre moyen équivalent, plusieurs de ces moyens pouvant être utilisés.

## Revendications

1. Dispositif de trappe (1) de prise de charge électrique pour véhicule électrique, comportant :
- un châssis (3) comprenant une ouverture (11) et un boîtier (5) adjacent à l'ouverture (11), le boîtier (5) présentant un orifice (17),
- un portillon mobile (9) formant trappe apte à fermer l'ouverture (11) du châssis,
- un élément d'articulation (7) du portillon (9) logé dans le boîtier (5),
- un couvercle (13) apte à fermer l'orifice (17) du boîtier,
**caractérisé en ce que** le couvercle (13) est monté sur l'orifice (17) du boîtier de manière à être écarté de cet orifice à au moins un bord (21) de celui-ci, en position fermée sur le boîtier (5), le couvercle (13) étant maintenu écarté du bord (21) par un moyen de maintien (23) apte à permettre au couvercle d'être déplacé de façon amortie vers le bord (21) sous un choc, notamment le choc d'un piéton sur une zone de la paroi de carrosserie (2) du véhicule couvrant le dispositif de trappe (1).

2. Dispositif (1) selon la revendication 1, **caractérisé en ce que** le moyen de maintien (23) est conçu de manière à exercer un rappel du couvercle (13) depuis une position en butée sur l'orifice (17) jusqu'à une position écartée du bord (21) de l'orifice où le libre débattement de l'élément d'articulation (7) peut s'exercer.

3. Dispositif selon l'une des revendications 1 ou 2, **caractérisé en ce que** l'effort de maintien ou rappel du couvercle (13) exercé par le moyen de maintien (23) en écartement de l'orifice (17) du boîtier est réglé à une valeur comprise entre 100 et 200 newtons, bornes comprises, pour amortir l'impact de choc d'un piéton, notamment de taille moyenne sur le dispositif de trappe.

4. Dispositif selon l'une quelconque des revendications 1 à 3, **caractérisé en ce que** le moyen de maintien (23) comprend au moins un ressort à lame (25) solidarisé au couvercle (13) ou à un bord de l'orifice (17), et en prise avec le bord correspondant (21) de l'orifice ou la partie de couvercle correspondante (31), respectivement.

5. Dispositif selon l'une quelconque des revendications 1 à 3, **caractérisé en ce que** le moyen de maintien (23) est choisi parmi un agencement à vérin amortisseur ou un frein relié au couvercle (13) et à l'orifice (17) du boîtier, un joint en mousse ou en matière élastomère interposé entre le couvercle (13) et l'orifice (17) du boîtier.

6. Dispositif selon l'une quelconque des revendications précédentes, **caractérisé en ce que**, en position fermée, le moyen de maintien (23) maintient le couvercle (13, 31) écarté du bord correspondant (21) de l'orifice du boîtier d'une distance e suffisante pour absorber le jeu de débattement de l'élément d'articulation (7) dans le boîtier (5).

7. Dispositif selon l'une quelconque des revendications précédentes, **caractérisé en ce que** le couvercle (13) comporte sur au moins une partie de sa périphérie une jupe (15) entourant le bord de l'orifice du boîtier lorsque le couvercle est en position fermée.

8. Dispositif selon la revendication 7, **caractérisé en ce que** le couvercle (13) est guidé dans son déplacement de façon amortie vers le bord (21) de l'orifice (17) du boîtier par au moins une lumière (29), de préférence deux lumières latérales opposées (29) de la jupe (15) du couvercle coopérant chacune avec un élément guide correspondant du boîtier monté coulissant dans la lumière (29).

9. Dispositif selon la revendication 8, **caractérisé en ce que** l'élément guide forme un élément de fin de course du couvercle à une extrémité de la lumière (29), en position écartée du couvercle sur l'orifice du boîtier, et un élément de butée de fin de course du couvercle à l'autre extrémité de la lumière (29), en cas de choc.

10. Véhicule comportant un dispositif de trappe (1) de prise de charge électrique selon l'une des revendications 1 à 9.

## Patentansprüche

1. Klappenvorrichtung (1) einer Ladebuchse für ein Elektrofahrzeug, die Folgendes aufweist:
- ein Chassis (3), das eine Öffnung (11) und ein Gehäuse (5) neben der Öffnung (11) aufweist, wobei das Gehäuse (5) eine Mündung (17) aufweist,
- eine bewegliche Tür (9), die eine Klappe bildet, die geeignet ist, um die Öffnung (11) des Chassis zu verschließen,
- ein Anlenkelement (7) der Tür (9), das in dem Gehäuse (5) untergebracht ist,
- einen Deckel (13), der die Mündung (17) des Gehäuses verschließen kann,
**dadurch gekennzeichnet, dass** der Deckel (13) derart auf die Mündung (17) des Gehäuses montiert ist, dass er von dieser Mündung an mindestens einem Rand (21) dieser in geschlossener Position auf dem Gehäuse (5) beabstandet ist, wobei der Deckel (13) von dem Rand (21) durch ein Haltemittel (23) beabstandet gehalten wird, das geeignet ist, um es dem Deckel zu erlauben, auf gedämpfte Art zu dem Rand (21) bei einem Stoß, insbesondere dem Stoß eines Fußgängers, auf einem Bereich der Karosseriewand (2) des Fahrzeugs, die die Klappenvorrichtung (1) abdeckt, bewegt zu werden.

2. Vorrichtung (1) nach Anspruch 1, **dadurch gekennzeichnet, dass** das Haltemittel (23) derart ausgelegt ist, dass es eine Rückstellung des Deckels (13) von einer Position im Anschlag auf der Mündung (17) bis zu einer von dem Rand (21) der Mündung beabstandeten Position, wo das freie Ausschlagen des Anlenkelements (7) erfolgen kann, ausübt.

3. Vorrichtung nach einem der Ansprüche 1 oder 2, **dadurch gekennzeichnet, dass** die Halte- oder Rückstellkraft des Deckels (13), die von dem Haltemittel (23) in Beabstandung von der Mündung (17) des Gehäuses ausgeübt wird, auf einen Wert eingestellt ist, der zwischen inklusive 100 und 200 Newton liegt, um den Stoßaufprall eines Fußgängers insbesondere mittlerer Größe auf der Klappenvorrichtung zu dämpfen.

4. Vorrichtung nach einem der Ansprüche 1 bis 3, **dadurch gekennzeichnet, dass** das Haltemittel (23) mindestens eine Blattfeder (25), die mit dem Deckel (13) oder an einem Rand der Mündung (17) und in Eingriff mit dem entsprechenden Rand (21) jeweils der Öffnung oder des entsprechenden Deckelteils (31) fest verbunden ist, aufweist.

5. Vorrichtung nach einem der Ansprüche 1 bis 3, **dadurch gekennzeichnet, dass** das Haltemittel (23) aus einer Einrichtung mit Dämpfzylinder oder einer Bremse, die mit dem Deckel (13) und mit der Mündung (17) des Gehäuses verbunden ist, einer Dichtung aus Schaumstoff oder Elastomermaterial, die zwischen dem Deckel (13) und der Mündung (17) des Gehäuses eingefügt ist, ausgewählt ist.

6. Vorrichtung nach einem der vorhergehenden Ansprüche, **dadurch gekennzeichnet, dass** das Haltemittel (23) in geschlossener Position den Deckel (13, 31) von dem entsprechenden Rand (21) der Mündung des Gehäuses um einen Abstand e beabstandet hält, der ausreicht, um das Ausschlagspiel des Anlenkelements (7) in dem Gehäuse (5) zu absorbieren.

7. Vorrichtung nach einem der vorhergehenden Ansprüche, **dadurch gekennzeichnet, dass** der Deckel (13) auf mindestens einem Teil seines Umfangs eine Schürze (15) aufweist, die den Rand der Mündung des Gehäuses umgibt, wenn der Deckel in geschlossener Position ist.

8. Vorrichtung nach Anspruch 7, **dadurch gekennzeichnet, dass** der Deckel (13) bei seiner Bewegung auf gedämpfte Art zu dem Rand (21) der Mündung (17) des Gehäuses durch mindestens einen Längsschlitz (29), vorzugsweise zwei gegenüberliegende seitliche Längsschlitze (29) der Schürze (15) des Deckels, die jeweils mit einer entsprechenden Führung des Gehäuses, die gleitend in dem Längsschlitz (29) montiert ist, zusammenwirken, geführt ist.

9. Vorrichtung nach Anspruch 8, **dadurch gekennzeichnet, dass** das Führungselement ein Bewegungsendelement des Deckels an einem Ende des Längsschlitzes (29) in von dem Deckel auf der Mündung des Gehäuses beabstandeter Position und ein Bewegungsendanschlagelement des Deckels an dem anderen Ende des Längsschlitzes (29) im Fall eines Stoßes bildet.

10. Fahrzeug, das eine Klappenvorrichtung (1) einer Ladebuchse nach einem der Ansprüche 1 bis 9 aufweist.

## Claims

1. Electric vehicle charging-socket flap device (1), comprising:
- a frame (3) comprising an aperture (11) and a housing (5) adjacent to the aperture (11), the housing (5) having an orifice (17),
- a mobile gate (9) forming a flap capable of closing the aperture (11) of the frame,
- an articulation element (7) of the gate (9) accommodated in the housing (5),
- a cover (13) capable of closing the orifice (17) of the housing,
**characterized in that** the cover (13) is mounted on the orifice (17) of the housing so as to be separated from said orifice on at least one edge (21) thereof, in the position in which it is kept closed on the housing (5), the cover (13) being kept separated from the edge (21) by a retaining means (23) capable of permitting the cover to be displaced in a damped manner toward the edge (21) in the event of an impact, in particular the impact of a pedestrian on an area of the wall of the body (2) of the vehicle covering the flap device (1).

2. Device (1) according to Claim 1, **characterized in that** the retaining means (23) is designed so as to restore the cover (13) from a position in abutment against the orifice (17) to a position separated from the edge (21) of the orifice where the free displacement of the articulation element (7) may be carried out.

3. Device according to either of Claims 1 and 2, **characterized in that** the force exerted by the retaining means (23) for retaining or restoring the cover (13) such that it is separated from the orifice (17) of the housing, is adjusted to a value of between 100 and 200 newtons, including the limits thereof, in order to dampen the impact of a pedestrian, in particular of average height, on the flap device.

4. Device according to any one of Claims 1 to 3, **characterized in that** the retaining means (23) comprises at least one leaf spring (25) fixed to the cover (13) or to an edge of the orifice (17) and in engagement with the corresponding edge (21) of the orifice or the corresponding part of the cover (31), respectively.

5. Device according to any one of Claims 1 to 3, **characterized in that** the retaining means (23) is selected from an arrangement of a shock-absorbing actuator or a brake connected to the cover (13) and to the orifice (17) of the housing, a seal consisting of foam or elastomeric material interposed between the cover (13) and the orifice (17) of the housing.

6. Device according to any one of the preceding claims, **characterized in that** in the closed position, the retaining means (23) retains the cover (13, 31) separated from the corresponding edge (21) of the orifice of the housing by a distance e which is sufficient to absorb the displacement clearance of the articulation element (7) in the housing (5).

7. Device according to any one of the preceding claims, **characterized in that** on at least one part of its periphery the cover (13) comprises a skirt (15) surrounding the edge of the orifice of the housing when the cover is in the closed position.

8. Device according to Claim 7, **characterized in that** the cover (13) is guided in its displacement in a damped manner toward the edge (21) of the orifice (17) of the housing, via at least one opening (29), preferably two opposing lateral openings (29) of the skirt (15) of the cover, each cooperating with a corresponding guide element of the housing slidably mounted in the opening (29).

9. Device according to Claim 8, **characterized in that** the guide element forms an end-of-travel element of the cover at one end of the aperture (29) in the separated position of the cover on the orifice of the housing, and an end-of-travel stop element of the cover at the other end of the aperture (29) in the event of an impact.

10. Vehicle comprising an electrical charging-socket flap device (1) according to one of Claims 1 to 9.
